# EUROPÄISCHE PATENTANMELDUNG

(11) **EP 3 252 323 A1**
(43) Veröffentlichungstag der Anmeldung: **06.12.2017**
(21) Anmeldenummer: 17173174.8
(22) Anmeldetag: 29.05.2017
(51) Int. Cl.: F16B 13/06, F16B 41/00

(54) **ANKER**

(30) Priorität: 02.06.2016 DE 102016110159
(71) Anmelder: fischerwerke GmbH & Co. KG, 72178 Waldachtal (DE)
(72) Erfinder: Kaupp, Andreas, 72280 Dornstetten (DE)
(74) Vertreter: Suchy, Ulrich Johannes

(57) **Zusammenfassung**

Die Erfindung betrifft einen Anker (1) mit beispielsweise einer Sechskantmutter als Schraubelement (9). Die Erfindung schlägt vor, das Schraubelement (9) durch einen Tropfen Klebstoff oder dergleichen als zerstörbarer Drehsicherung in seiner Lage auf einem Ankerschaft (2) zu sichern. Die Erfindung sichert das Schraubelement (9) gegen eine unbeabsichtigte Bewegung aus seiner vorgesehenen Lage durch Transport, Umfüllen, Ein- oder Auspacken.

## Beschreibung

Die Erfindung betrifft einen Anker mit den Merkmalen des Oberbegriffs des Anspruchs 1.

Anker sind an sich bekannt. Sie sind typischerweise stangenförmig und weisen ein Gewinde zur Befestigung eines Gegenstands am Anker und/oder zum Aufspreizen einer Spreizhülse des Ankers auf. Solche Anker dienen zu einer Befestigung eines Gegenstands an einem Ankergrund aus beispielsweise Beton, Stein oder Mauerwerk. Zur Montage bzw. zur Befestigung eines Anbauteils am Ankergrund wird der Anker in ein Ankerloch im Ankergrund eingebracht und durch Aufspreizen insbesondere einer Spreizhülse mechanisch oder chemisch mit beispielsweise einem Mörtel, auch einem Kunstharzmörtel, oder Klebstoff im Ankerloch im Ankergrund verankert, d.h. befestigt.

Aufgabe der Erfindung ist, ein auf ein Gewinde eines Ankers geschraubtes Schraubelement bis zur Verankerung des Ankers in einem Ankerloch in einem Ankergrund gegen Bewegung zu sichern.

Diese Aufgabe wird erfindungsgemäß durch einen Anker mit den Merkmalen des Anspruchs 1 gelöst. Der erfindungsgemäße Anker weist einen Ankerschaft mit einem Gewinde und ein Schraubelement, das an einer vorgesehenen Stelle an dem Gewinde des Ankerschafts angeordnet ist und das ein Gegengewinde aufweist, das mit dem Gewinde des Ankerschafts in Eingriff steht, auf. Das Schraubelement dient beispielsweise zum Aufspreizen des Ankers und/oder zur Befestigung eines Gegenstands an einem Ankergrund mit dem Anker. Um zu verhindern, dass sich das Schraubelement vor einer Verankerung ungewollt an dem Gewinde des Ankerschafts dreht und dadurch von der vorgesehenen Stelle weg bewegt, weist der erfindungsgemäße Anker eine zerstörbare Drehsicherung auf, die durch Drehen des Schraubelements in Bezug auf den Ankerschaft zerstörbar ist. Die Drehsicherung dient zur Transportsicherung des Schraubelements am Ankerschaft und bewirkt eine Lagesicherung des Schraubelements in axialer Richtung gegenüber dem Ankerschaft bis zu einer Montage des Ankers in einem Ankerloch im Ankergrund. Die Drehsicherung verhindert ein ungewolltes selbsttätiges Drehen des Schraubelements an dem Gewinde des Ankerschafts beispielsweise während eines Transports, Umfüllens, Ver- oder Entpackens. Zur Montage lässt sich das Schraubelement eines zur Montage in ein Ankerloch im Ankergrund eingebrachten Ankers beispielsweise mit einem Schraubenschlüssel auf dem Gewinde des Ankerschafts drehen, wodurch die Drehsicherung zerstört und der Anker montiert und/oder ein Gegenstand gegen den Ankergrund gespannt wird.

Die Erfindung ist grundsätzlich für jeden Anker verwendbar, beispielsweise auch für Anker, die mit einem Mörtel, Kunstharz, Klebstoff oder dergleichen in einem Ankerloch in einem Ankergrund verankert werden. Diese Art der Verankerung wird auch als chemische Verankerung bezeichnet. Insbesondere ist die Erfindung für einen mechanisch aufspreizbaren Anker vorgesehen. Mechanisch aufspreizbare Anker weisen typischerweise eine Spreizhülse auf dem Ankerschaft auf, die durch Einziehen eines Spreizkonus oder dergleichen Spreizelement in die Spreizhülse aufspreizbar ist. Das Einziehen eines Spreizelements in die Spreizhülse ist gleichbedeutend mit einem Aufschieben der Spreizhülse auf das Spreizlement. Das Aufspreizen der Spreizhülse kann auch als Aufspreizen des Ankers aufgefasst werden. Durch Aufspreizen der Spreizhülse in einem Ankerloch in einem Ankergrund wird der Anker mechanisch in dem Ankerloch im Ankergrund verankert. Das Ankerloch kann hinterschnitten oder nicht hinterschnitten sein. Eine Axialbewegung des Spreizelements in Bezug auf die Spreizhülse zum Aufspreizen der Spreizhülse wird durch Drehen des Schraubelements auf dem Gewinde des Ankerschafts erzeugt. Das Schraubelement kann in diesem Fall auch als Spannelement aufgefasst werden. Dabei kann es zugleich auch als Befestigungselement zur Befestigung eines Gegenstands auf dem Ankerschaft bzw. zur Befestigung eines Gegenstands mit dem Anker am Ankergrund dienen. Bei einer chemischen Verankerung dient das Schraubelement normalerweise nur als Befestigungselement und nicht als Spannelement.

Das Schraubelement kann eine Mutter sein, die durch Drehung auf dem Gewinde des Ankerschafts bei der Montage eine Axialbewegung beispielsweise einer Spreizhülse in Bezug auf ein Spreizelement zum Aufspreizen der Spreizhülse erzeugt. Das Schraubelement kann beispielsweise auch ein Spreizelement sein, das das Gegengewinde zum Gewinde des Ankerschafts aufweist und zur Montage durch Drehung des Ankerschafts in Bezug auf das Spreizelement axial in Bezug auf den Ankerschaft bewegt wird. Die Axialbewegung des Spreizelements in Bezug auf den Ankerschaft dient einem Aufspreizen der Spreizhülse. Die Aufzählung ist nicht abschließend, sondern beispielhaft. Typischerweise ist das Spreizelement konisch und wird, wenn es ein Innengewinde als Gegengewinde aufweist, als Konusmutter bezeichnet. Möglich ist allerdings auch ein pyramidenförmiges oder keilförmiges Spreizelement. Andere Formen für das Spreizelement sind nicht ausgeschlossen.

In bevorzugter Ausgestaltung der Erfindung ist die Drehsicherung ein Klebstoff, Drehsicherungslack oder dergleichen. Allgemein kann die Drehsicherung auch als Masse aufgefasst werden, die am Ankerschaft und am Schraubelement haftet und durch Drehung des Schraubelements in Bezug auf den Ankerschaft zerstörbar ist. Insbesondere handelt es sich bei dem Klebstoff um einen Schmelzklebstoff, insbesondere um einen Hotmelt mit kurzer Abbindezeit, beispielsweise um Jowat Toptherm 256.00, der zum Auftragen auf den Ankerschaft bzw. auf das Schraubelement durch Erhitzen aufgeschmolzen und verflüssigt wird und der sich nach dem Auftragen durch Abkühlen wieder verfestigt. Vorteilhaft an der Verwendung eines Schmelzklebstoffs ist, dass diese Art Klebstoff im Regelfall lösemittelfrei ist und dass Schmelzklebstoffe in Produktionsprozessen sehr schnelle Taktzeiten ermöglichen. Der Klebstoff sichert das Schraubelement gegen eine Drehung des Schraubelements in Bezug auf den Ankerschaft, bis ein bestimmtes Drehmoment überschritten und die Drehsicherung zerstört wird. Dabei ist ein Drehmoment zum Zerstören der Drehsicherung niedriger als und beträgt vorzugsweise nur einen Bruchteil, insbesondere weniger als 10 %, insbesondere weniger als 5 % eines Nenn-Anzugsmoments zum Aufspreizen des Ankers und/oder zur Befestigung eines Gegenstands. Unter einer Zerstörung der Drehsicherung soll auch ein Lösen der Drehsicherung vom Ankerschaft und/oder vom Schraubelement verstanden werden.

Eine Ausgestaltung der Erfindung sieht vor, dass die Drehsicherung an oder nahe einem einer Spannrichtung abgewandten Ende des Schraubelements angeordnet ist. Die Spannrichtung ist die Richtung, in der sich das Schraubelement in Bezug auf den Ankerschaft bewegt, um den Anker aufzuspreizen und/oder einen Gegenstand zu befestigen. Mit "nahe an dem Ende" ist gemeint, dass die Drehsicherung nicht ganz an diesem Ende des Schraubelements sein muss. Sie kann beispielsweise ein- oder zwei Gewindegänge, ein Viertel oder ein Halb eines Gewindedurchmessers oder ein Viertel oder ein Halb einer axialen Dicke bzw. Länge des Schraubelements von dem Ende des Schraubelements entfernt sein. Insbesondere ist die Drehsicherung aber derart angeordnet, dass sie zumindest teilweise an einem Teil des Endes des Schraubelements angeordnet ist, das der Spannrichtung abgewandt ist. Durch die Anordnung der zerstörbaren Drehsicherung an oder nahe dem der Spannrichtung abgewandten Ende des Schraubelements bewegt sich das Schraubelement beim Spannen von der Drehsicherung weg und nicht über die Drehsicherung hinweg. Letzteres würde ein Drehmoment des Schraubelements auf dem Ankerschaft erhöhen, was beim Nenn-Anzugsmoment berücksichtigt werden müsste, oftmals jedoch unkalkulierbar sein dürfte.

Vorzugsweise ist das Schraubelement bündig mit dem Ankerschaft und/oder dem Gewinde und/oder steht in axialer Richtung, also in oder entgegen der Einbringrichtung des Ankers in ein Ankerloch, über den Ankerschaft und/oder über das Gewinde über. Ist der Anker ein Bolzenanker und das Schraubelement eine an einem in Einbringrichtung des Ankers in ein Ankerloch hinteren Ende des Ankerschafts angeordnete Mutter, so steht das hintere Ende der Mutter vor der Montage axial über den Ankerschaft und/oder das Gewinde über oder ist mit dem Ankerschaft und/oder dem Gewinde bündig. Insbesondere bildet die Mutter vor der Montage, wenn die Mutter gegen ein Drehen am Ankerschaft gesichert ist, das hintere Ende des Ankers. Ist der Anker dagegen ein Hülsenanker und das Schraubelement eine vorn am Ankerschaft angeordnete Konusmutter, so steht die Konusmutter vor der Montage axial nach vorn über das vordere Ende des Ankerschafts und/oder das Gewinde über oder ist mit dem vorderen Ende des Ankerschafts oder des Gewindes bündig. Insbesondere bildet die Konusmutter das in Einbringrichtung vordere Ende des Ankers. Dass das Schraubelement bündig mit dem Ankerschaft und/oder dem Gewinde ist oder in axialer Richtung über den Ankerschaft und/oder das Gewinde übersteht hat den Vorteil, dass der Ankerschaft relativ kurz und materialsparend ausgebildet werden kann, da er bzw. das Gewinde nicht über das Schraubelement überstehen muss. Gegenüber den aus dem Stand der Technik bekannten Ankern, bei denen der Ankerschaft über das Schraubelement übersteht, um ein ungewolltes Losdrehen des Schraubelements vom Ankerschaft beim Transport zu verhindern, kann der erfindungsgemäße Anker daher kostengünstiger hergestellt werden.

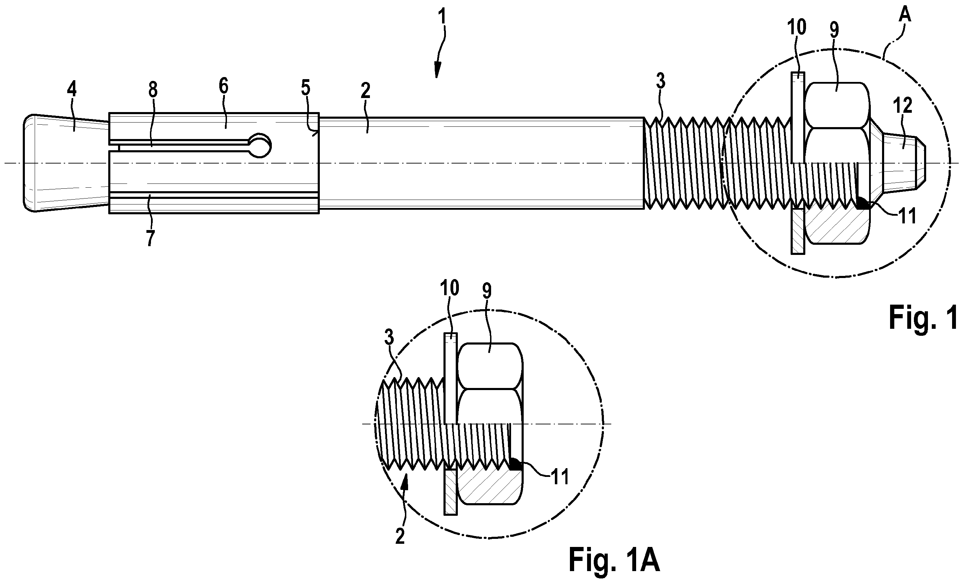

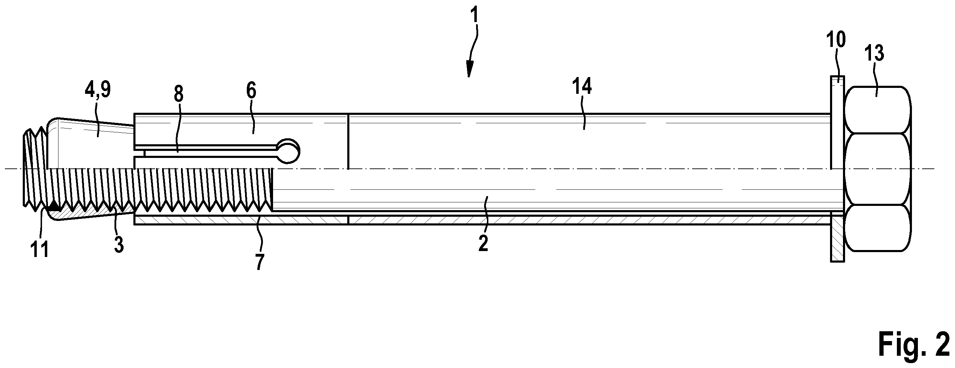

Die Erfindung wird nachfolgend anhand in der Zeichnung dargestellter Ausführungsbeispiele näher erläutert. Die Figuren 1 und 2 zeigen zwei Ausführungsbeispiele erfindungsgemäßer Anker in Seitenansicht und Figur 1A eine abgewandelte Einzelheit gemäß Kreis A in Figur 1.

Die in der Zeichnung dargestellten Ausführungsbeispiele der Erfindung sind mechanisch aufspreizbare Anker 1, wobei der Anker 1 aus Figur 1 ein so genannter Bolzenanker und der Anker 1 aus Figur 2 ein so genannter Hülsenanker ist. Der Anker 1 aus Figur 1 weist einen zylinderstangenförmigen Ankerschaft 2 auf, der an einem Ende ein Gewinde 3 und an einem anderen Ende einen Kegelstumpf als Spreizelement 4 aufweist. Das Spreizelement 4 ist einstückiger Bestandteil des Ankerschafts 2, es erweitert sich in Richtung des Endes des Ankerschafts 2, an dem es angeordnet ist. Das Ende des Ankerschafts 2 mit dem Spreizelement 4 wird nachfolgend auch als vorderes Ende bezeichnet, zur Verankerung wird der Anker 1 mit dem vorderen Ende voraus in ein Ankerloch in einem Ankergrund eingebracht. Das Ende mit dem Gewinde 3 wird nachfolgend auch als hinteres Ende bezeichnet, es steht bei verankertem Anker 1 aus dem Ankerloch vor.

Mit Abstand von dem Spreizelement 4 weist der Ankerschaft 2 eine Ringsstufe als Widerlager 5 für eine Spreizhülse 6 auf, die zwischen dem Widerlager 5 und dem Spreizelement 4 auf dem Ankerschaft 2 angeordnet ist. Um sie aufspreizen zu können, weist die Spreizhülse 6 einen durchgehenden Längsschlitz 7 und zwei bis drei nicht durchgehende Längsschlitze 8 auf, die an einem vorderen, dem Spreizelement 4 zugewandten Ende der Spreizhülse 6 offen sind und sich über etwa zwei Drittel bis drei Viertel einer Länge der Spreizhülse 6 erstrecken.

Auf das Gewinde 3 des Ankerschafts 2 ist eine Mutter als Schraubelement 9 geschraubt, deren Innengewinde ein Gegengewinde für das Gewinde 3 des Ankerschafts 2 bildet. Im Ausführungsbeispiel handelt es sich um eine herkömmliche Sechskantmutter. Auf einer dem vorderen Ende zugewandten Seite des Schraubelements 9 ist eine Unterlegscheibe 10 angeordnet, die allerdings für die Erfindung an sich ohne Bedeutung ist. Die Stelle, an der sich das Schraubelement 9 auf dem Ankerschaft 2 befindet, bestimmt eine Eindringtiefe des Ankers 1 in ein Ankerloch in einem Ankergrund und ist maßgeblich für eine ordnungsgemäße Aufspreizung des Ankers 1. Das Schraubelement 9 ist deswegen mit einem Tropfen Klebstoff gegen Drehen und damit auch gegen eine Axialbewegung in Bezug auf den Ankerschaft 2 gesichert. Der Klebstoff ist ein Schmelzklebstoff, der in geschmolzenem, heißen Zustand flüssig aufgebracht wurde und nach dem Abkühlen fest haftend mit dem Schraubelement 9 und dem Ankerschaft 2 verbunden ist. Der Tropfen Klebstoff bildet eine zerstörbare Drehsicherung 11. Durch die Drehsicherung 11 ist das Schraubelement 9 bis zu einer Verankerung beispielsweise bei einem Transport, Umfüllen, Ein- oder Auspacken an der vorgesehenen Stelle des Ankerschafts 2 gegen Bewegung in Bezug auf den Ankerschaft 2 gesichert.

Zur Montage in einem Ankerloch in einem nicht gezeichneten Ankergrund wird der Anker 1 in Einbringrichtung mit dem Spreizelement 4 voraus in das Bohrloch eingebracht. Dabei stützt sich die Spreizhülse 6 am Widerlager 5 ab. Liegt die Unterlegscheibe 10 am Ankergrund oder einem zu befestigenden Gegenstand und an dem Schraubelement 9 des Ankers 1 an, wird das Schraubelement 9 in einer Spannrichtung auf dem Gewinde 3 des Ankerschafts 2 gedreht. Die "Spannrichtung" ist die Richtung, die das Spreizelement 4 in Richtung des Schraubelements 9 bewegt und damit das Spreizelement 4 in die Spreizhülse 6 einzieht, die dadurch aufgespreizt wird. Das Aufspreizen der Spreizhülse 6 kann auch als Aufspreizen des Ankers 1 aufgefasst werden. Durch das Aufspreizen wird der Anker 1 im Ankerloch im Ankergrund verankert, das heißt befestigt. Beim Drehen des Schraubelements 9 wird die Drehsicherung 11 zerstört oder sie löst sich von dem Schraubelement 9 und/oder vom Gewinde 3 des Schraubenschafts 2, was ebenfalls als Zerstören der Drehsicherung 11 aufgefasst wird. Ein zum Zerstören der Drehsicherung 11 erforderliches Drehmoment ist ein Bruchteil von wenigen Prozent eines Nenn-Drehmoments zum Aufspreizen der Spreizhülse 6, beispielsweise 2 %.

Im Ausführungsbeispiel ist die Drehsicherung 11 an einem der Spannrichtung abgewandten Ende des Schraubelements 9 angeordnet, so dass sich das Schraubelement 9 beim Spannen und Aufspreizen der Spreizhülse 6 von der Drehsicherung 11 weg und nicht über die Drehsicherung 11 bewegt. Letzteres hätte eine unkalkulierbare und deswegen unerwünschte Erhöhung eines Drehmoments des Schraubelements 9 auf dem Gewinde 3 des Ankerschafts 2 zur Folge.

In Figur 1 steht das hintere Ende des Ankerschafts 2 aus dem Schraubelement 9 vor. Das hintere Ende des Ankerschafts 2 ist als Einschlagzapfen 12 ausgebildet, dessen Durchmesser nicht größer als der Kerndurchmesser des Gewindes 3 ist und der sich nach hinten verjüngt. Mit beispielsweise Hammerschlägen auf den Einschlagzapfen 12 lässt sich der Anker 1 in das Ankerloch eintreiben. Das hintere Ende des Schraubelements 9 steht axial nach hinten über das Gewinde 3 über, so dass das Gewinde 3 relativ kurz ausgebildet werden kann.

Bei der in Figur 1A gezeigten Abwandlung weist der Ankerschaft 2 keinen Einschlagzapfen auf, sondern endet mit dem Gewinde 3. Das hintere Ende des Ankerschafts 2 kann in der Stellung, in der das Schraubelement 9 durch die Drehsicherung 11 auf dem Gewinde 3 des Ankerschafts 2 gegen Drehung gesichert ist, bündig mit einem hinteren Ende des Schraubelements 9 sein oder sogar, wie es Figur 1A zeigt, in dem Schraubelement 9 versenkt sein, derart, dass das Schraubelement 9 vor der Montage in axialer Richtung nach hinten über den Ankerschaft 2 und das Gewinde 3 übersteht. Diese Ausgestaltung der Erfindung ermöglicht einen kürzeren Ankerschaft 2 und ist insbesondere dann möglich, wenn der Anker 1 mit geringer Kraft in ein Ankerloch in einem Ankergrund einbringbar ist. Endet der Ankerschaft 2 bündig mit dem Schraubelement 9, ist die Drehsicherung 11 wie in Figur 1 an dem hinteren Ende des Schraubelements 9 vorgesehen. Ist wie in Figur 1A das hintere Ende des Ankerschafts 2 im Schraubelement 9 versenkt, ist die Drehsicherung 11 am hinteren Ende des Ankerschafts 2 im Schraubelement 9 angeordnet.

Bei der nachfolgenden Erläuterung der Figur 2 werden für Bauteile, die mit Figur 1 übereinstimmen, gleiche Bezugszahlen wie in Figur 1 verwendet. Der Ankerschaft 2 des in Figur 2 gezeichneten Ankers 1 weist an seinem hinteren Ende einen mit dem Ankerschaft 2 drehfesten, im Ausführungsbeispiel einstückigen Schraubenkopf 13 auf. Der Ankerschaft 2 weist nicht an seinem hinteren, sondern an seinem vorderen Ende ein Gewinde 3 auf. Auf das Gewinde 3 ist ein kegelstumpfförmiges Spreizelement 4 geschraubt, das ein axiales Durchgangsloch mit einem Innengewinde aufweist. Das Innengewinde des Spreizelements 4 bildet ein Gegengewinde, das mit dem Gewinde 3 des Schraubenschafts 2 in Eingriff steht. Das Spreizelement 4 kann auch als Konusmutter und der Anker 1 als Hülsenanker bezeichnet werden. Das Spreizelement 4 bildet zugleich ein Schraubelement 9 des Ankers 1.

Auf dem Ankerschaft 2 befinden sich zwischen dem Spreizelement 4 und einer unter dem Schraubenkopf 13 auf dem Ankerschaft 2 angeordneten Unterlegscheibe 10 eine Spreizhülse 6 und eine Stützhülse 14. Die Stützhülse 14 ist ein Rohr ohne Schlitze, das sich an der Unterlegscheibe 10 abstützt. Die Spreizhülse 6 ist wie in Figur 1 mit einem durchgehenden Längsschlitz 7 und nicht durchgehenden Längsschlitzen 8 ausgebildet. Alternativ kann die Stützhülse einstückig mit der Spreizhülse sein, die dann insbesondere keinen durchgehenden Längsschlitz aufweist. Das vordere Ende der Spreizhülse 6 befindet sich an oder auf dem Spreizelement 4.

Zu einer Montage in einem Ankerloch in einem nicht gezeichneten Ankergrund wird der Anker 1 aus Figur 2 mit dem Spreizelement 4 voraus in Einbringrichtung in das Ankerloch eingebracht. Durch Drehen des Ankerschafts 2 am Schraubenkopf 13 wird das Spreizelement 4 in Richtung des Schraubenkopfs 13 bewegt und dabei in die Spreizhülse 6 eingezogen. Die Spreizhülse 6 wird dadurch aufgespreizt und der Anker 1 im Ankerloch verankert.

Die Spreizhülse 6, die in Figur 2 zugleich auch das Schraubelement 9 bildet, steht axial nach vorn über das Gewinde 3 über. Damit die Spreizhülse 6 bis zur Verankerung an einer vorgesehenen Stelle auf dem Ankerschaft 2 bleibt und sich nicht durch beispielsweise Transport, Umfüllen, Ein- oder Auspacken usw. auf dem Ankerschaft 2 bewegt, ist ein Tropfen Klebstoff als zerstörbare Drehsicherung 11 am Gewinde 3 des Ankerschafts 2 und dem Spreizelement 4 angebracht. Auch hier ist die Drehsicherung 11 an einem der Spannrichtung abgewandten Ende des Spreizelements 4 angeordnet, das hier zugleich auch das Schraubelement 9 bildet. Die Spannrichtung ist hier in Richtung des Schraubenkopfs 13, die Drehsicherung befindet sich deswegen an einem vorderen Ende des Spreizelements 4.

### Bezugszeichenliste

### Anker

- 1: Anker
- 2: Ankerschaft
- 3: Gewinde
- 4: Spreizelement
- 5: Widerlager
- 6: Spreizhülse
- 7: durchgehender Längsschlitz
- 8: nicht durchgehender Längsschlitz
- 9: Schraubelement
- 10: Unterlegscheibe
- 11: Drehsicherung
- 12: Einschlagzapfen
- 13: Schraubenkopf
- 14: Stützhülse

## Patentansprüche

1. Anker, mit einem Ankerschaft (2), der ein Gewinde (3) aufweist, an dem ein Schraubelement (9) angeordnet ist, das ein Gegengewinde aufweist, das mit dem Gewinde (3) des Ankerschafts (2) in Eingriff steht, **dadurch gekennzeichnet, dass** das Schraubelement (9) durch eine zerstörbare Drehsicherung (11), die durch Drehen des Schraubelements (9) in Bezug auf den Ankerschaft (2) zerstörbar ist, gegen Drehen am Ankerschaft (2) gesichert ist.

2. Anker nach Anspruch 1, **dadurch gekennzeichnet, dass** durch Drehen des Schraubelements (9) in Bezug auf den Ankerschaft (2) das Schraubelement (9) in Bezug auf den Ankerschaft (2) axial bewegbar ist und dass das Schraubelement (9) bei einer Axialbewegung in einer Spannrichtung in Bezug auf den Ankerschaft (2) den Anker (1) aufspreizt.

3. Anker nach Anspruch 1 oder 2, **dadurch gekennzeichnet, dass** das Schraubelement (9) eine Mutter oder ein Spreizelement (4) ist.

4. Anker nach einem der Ansprüche 1 bis 3, **dadurch gekennzeichnet, dass** die Drehsicherung (11) eine am Schraubelement (9) und am Ankerschaft (2) haftende Masse ist.

5. Anker nach einem der vorhergehenden Ansprüche, **dadurch gekennzeichnet, dass** die Drehsicherung (11) an oder nahe einem einer Spannrichtung abgewandten Ende des Schraubelements (9) angeordnet ist.

6. Anker nach einem der vorhergehenden Ansprüche, **dadurch gekennzeichnet, dass** das Schraubelement (9) bündig mit dem Ankerschaft (2) und/oder dem Gewinde (3) ist und/oder in axialer Richtung über den Ankerschaft (2) und/oder das Gewinde (3) übersteht.
